# EUROPEAN PATENT APPLICATION

(11) **EP 3 751 361 A1**
(43) Date of publication of application: **16.12.2020**
(21) Application number: 19180076.2
(22) Date of filing: 13.06.2019
(51) Int. Cl.: G05B 13/02

(54) **SYSTEM FOR ACTION INDICATION DETERMINATION**

(71) Applicant: ABB Schweiz AG, 5400 Baden (CH)
(72) Inventor: Schmitt, Johannes, 68526 Ladenburg (DE); Gross, Christian, 64347 Griesheim (DE)
(74) Representative: Maiwald Patent- und Rechtsanwaltsgesellschaft mbH

(57) **Abstract**

The present invention relates to a system for action indication determination. The system comprises an input unit, a first processing unit, a second processing unit, and an output unit. The input unit is configured to provide the first processing unit with a plurality of sensor data from a plurality of sensors. The second processing unit is configured to implement a machine learning algorithm to generate at least one pre-processing rule, wherein the generation comprises utilization of a plurality of training sensor data and associated training action indications. The second processing unit is configured to provide the first processing unit with the at least one pre-processing rule. The first processing unit is configured to implement a pre-processing algorithm to determine pre-processed sensor data, wherein the determination comprises utilization of the at least one pre-processing rule and the plurality of sensor data. The first processing unit is configured to provide the pre-processed sensor data to the second processing unit. The second processing unit is configured to implement the machine learning algorithm to determine at least one action indication, wherein the determination comprises utilization of the pre-processed sensor data. The output unit is configured to output the at least one action indication.

## Description

### FIELD OF THE INVENTION

The present invention relates to a system for action indication determination, and to a method for action indication determination, and to a computer program element and computer readable medium.

### BACKGROUND OF THE INVENTION

A process plant can have many process control systems, for example those used in electrical, chemical, petroleum, other industrial processes and in building automation. One or more process controllers are communicatively coupled to various field devices such as valves, valve positioners, relays, switches, various sensors that monitor temperature, pressure, position, flow rates etc. The process controllers receive data signals indicative of process measurements made by the field devices, which can be used to generate control signals to implement control routines.

With respect to this data-flow, for example such sensor data, evaluation models are sought to be developed to better understand the processes, to seek to better determine what actions should be taken for specific situations based on that data-flow.

Systems have been developed that use Artificial Intelligence or self-learning concepts, and that use evaluation models that are created based on a certain (training) data set. Typically, evaluation models are used to evaluate a set of input variables (related to the training data set) to determine a (single) result value. Often the evaluation model is considered as black-box - i.e. it is unknown or not relevant on which sensor data the result value is depending on. In a typical setup the model evaluation is performed in a component with larger CPU and memory resources than the components where the data is acquired. Often the model evaluation is performed in a backend system (e.g. a cloud), requiring that the sensor data is transmitted throught a network or also throught the internet. While not knowing which sensor value change might cause a change of the result value, all value changes must be transmitted to component that performs the model evaluation. The unfiltered data transport and the triggering of the model evaluation on each value change results in large efforts.

Various issues are related to this approach: besides the large efforts for data transmission and model evaluation, this approach is not well scalable - regarding more and more installed sensors and more (loT/AI) backend services that come up. Also, data privacy is often an issue, when all data must be transferred towards the backend.

There is a need to address these issues.

### SUMMARY OF THE INVENTION

Therefore, it would be advantageous to have an improved ability to determine actions to be taken within such a process environment.

The object of the present invention is solved with the subject matter of the independent claims, wherein further embodiments are incorporated in the dependent claims.

In a first aspect, there is provided a system for action indication determination, comprising:
- an input unit;
- a first processing unit;
- a second processing unit; and
- an output unit.

The input unit is configured to provide the first processing unit with a plurality of sensor data from a plurality of sensors. The second processing unit is configured to implement a machine learning algorithm to generate at least one pre-processingrule, wherein the generation comprises utilization of a plurality of training sensor data and associated training action indications. The second processing unit is configured to provide the first processing unit with the at least one pre-processing rule. The first processing unit is configured to implement a pre-processing algorithm to determine pre-processed sensor data, wherein the determination comprises utilization of the at least one pre-processing rule and the plurality of sensor data. The first processing unit is configured to provide the pre-processed sensor data to the second processing unit. The second processing unit is configured to implement the machine learning algorithm to determine at least one action indication and/or at least one null-action indication, wherein the determination comprises utilization of the pre-processed sensor data. The output unit is configured to output the at least one action indication and/or the at least one null-action indication.

In other words, a system and method for action indication determination is enabled, where pre-processing can be carried out towards a processing device in the field with a reduction in transmission bandwidth and processing required by a backend processing device or system.

Thus, the system and method is able to flexibly decouple data evaluation and data pre-processing within a process environment.

In an example, the at least one pre-processing rule comprises at least one filtering rule.

In an example, the pre-processed sensor data comprises a sub-set of the sensor data.

Thus, the first processing unit can pre-process sensor data to determine a sub-set of sensor data, by for example filtering of the sensor data, but also generate new sensor-data which is not a subset (e.g. by aggregation/splitting/time-windows). Thus, the first first processing unit can execute/apply pre-processing rules to adapt the sensor data.

Generation of the at least one pre-processing rule by the second processing unit means that these rules are generated depending on a process that applies machine learning and/or a resulting evaluation model.

In an example, generation of the at least one pre-processing rule comprises a determination of at least one correlation between the plurality of training sensor data and associated action indications.

In an example, generation of the at least one pre-processing rule comprises an identification of training sensor data that is unused or substantially unused with respect to the associated training action indications, the identification comprising utilization of the at least one correlation.

In an example, generation of the at least one pre-processing rule comprises an identification of at least one sensor that is unused or substantially unused with respect to the associated training action indications, the identification comprising utilization of the at least one correlation.

Thus, sensors that are unused or infrequently unused can be identified, and thus the data they generate can be determined not to be taken into account.

In an example, the machine learning algorithm comprises a neural network.

In an example, the machine learning algorithm comprises a Bayesian network.

In an example, generation of the at least one pre-processing rule comprises an identification of a sub-set of the plurality of training sensor data that is unused or substantially unused with respect to the associated training action indications.

In an example, the machine learning algorithm comprises a decision tree algorithm.

In an example, generation of the at least one pre-processing rule comprises a determination of dependencies between the plurality of training sensor data and associated training action indications.

In an example, the pre-processing algorithm comprises a complex event processing algorithm.

In an example, determination of the pre-processed sensor data comprises utilization of the at least one pre-processing rule to select one or more sensor devices.

In an example, determination of the pre-processedsensor data comprises utilization of the at least one pre-processing rule to activate or deactivate one or more sensor devices.

Thus, in other words the collection of sensor data is controllable, with respect to sensor devices.

In an example, determination of the pre-processed sensor data comprises utilization of the at least one pre-processing rule to configure a communication mechanism.

Thus, underlying system elements like field devices can be configured, for example to only generate and communicate required sensor data.

In an example, the second processing unit is configured to add one or more of the pre-processed sensor data to the plurality of training sensor data and add one or more associated action indications of the at least one action indication to the training action indications. The second processing unit is configured to update the at least one pre-processing rule, wherein the update comprises utilization of the of updated plurality of training sensor data and associated updated training action indications.

In a second aspect, there is provided a method for action indication determination, comprising:
a) providing a plurality of sensor data from a plurality of sensors;
b) implementing a machine learning algorithm and generating at least one pre-processing rule, the generating comprising utilizing a plurality of training sensor data and associated training action indications;
c) implementing a pre-processing algorithm and determining pre-processed sensor data, the determining comprising utilizing the at least one pre-processing rule and the plurality of sensor data;
d) implementing the machine learning algorithm and determining at least one action indication, the determining comprising utilizing the pre-processed sensor data; and
e) outputting the at least one action indication.

According to another aspect, there is provided a computer program element controlling a system as previously described which, when the computer program element is executed by a processing unit, is adapted to perform the method steps as previously described.

According to another aspect, there is also provided a computer readable medium having stored the computer element as previously described.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:

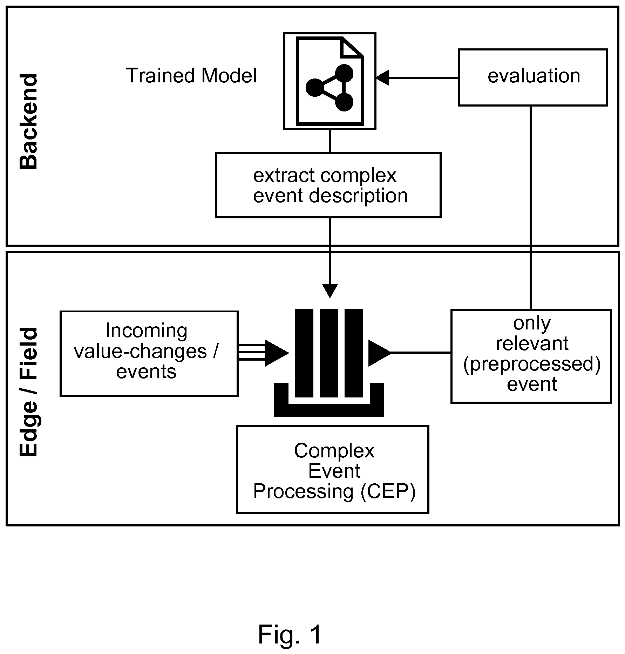

Fig. 1 shows an example of a detailed workflow of a method for action indication determination.

### DETAILED DESCRIPTION OF EMBODIMENTS

Fig. 1 relates to a system and method for action indication determination. In an example the system comprises an input unit, a first processing unit, a second processing unit, and an output unit. The input unit is configured to provide the first processing unit with a plurality of sensor data from a plurality of sensors. The second processing unit is configured to implement a machine learning algorithm to generate at least one pre-processing rule. The generation of the at least one pre-processing rule comprises utilization of a plurality of training sensor data and associated training action indications. The second processing unit is configured to provide the first processing unit with the at least one pre-processing rule. The first processing unit is configured to implement a pre-processing algorithm to determine pre-processed sensor data. The determination of the pre-processed sensor data comprises utilization of the at least one pre-processing rule and the plurality of sensor data. The first processing unit is configured to provide the pre-processed sensor data to the second processing unit. The second processing unit is configured to implement the machine learning algorithm to determine at least one action indication. The determination of the at least one action indication comprises utilization of the pre-processed sensor data. The output unit is configured to output the at least one action indication.

In a similar manner to generation of pre-processing rules, in an example the system is configured to pre-process data, where the pre-processed data is for example required/related to the applied model evaluation algorithm, and these pre-processing rules can be shifted downwards to the edge.

According to an example, generation of the at least one pre-processing rule comprises a determination of at least one correlation between the plurality of training sensor data and associated action indications.

According to an example, generation of the at least one pre-processing rule comprises an identification of training sensor data that is unused or substantially unused with respect to the associated training action indications, the identification comprising utilization of the at least one correlation.

In an example, generation of the at least one pre-processing rule comprises an identification of at least one sensor that is unused or substantially unused with respect to the associated training action indications, the identification comprising utilization of the at least one correlation.

According to an example, the machine learning algorithm comprises a neural network.

According to an example, the machine learning algorithm comprises a Bayesian network.

According to an example, generation of the at least one pre-processing rule comprises an identification of a sub-set of the plurality of training sensor data that is unused or substantially unused with respect to the associated training action indications.

According to an example, the machine learning algorithm comprises a decision tree algorithm.

According to an example, generation of the at least one pre-processing rule comprises a determination of dependencies between the plurality of training sensor data and associated training action indications.

According to an example, the pre-processing algorithm comprises a complex event processing algorithm.

According to an example, determination of the pre-processed of sensor data comprises utilization of the at least one pre-processing rule to select one or more sensor devices. According to an example, determination of the pre-processed sensor data comprises utilization of the at least one pre-processing rule to activate or deactivate one or more sensor devices.

According to an example, determination of the pre-processed sensor data comprises utilization of the at least one pre-processing rule to configure a communication mechanism.

According to an example, the second processing unit is configured to add one or more of the pre-processed sensor data to the plurality of training sensor data and add one or more associated action indications of the at least one action indication to the training action indications. The second processing unit is configured to update the at least one pre-processing rule comprising utilization of the of updated plurality of training sensor data and associated updated training action indications.

Fig. 1 also relates to a workflow or method for action indication determination. The method comprises:
a) providing a plurality of sensor data from a plurality of sensors;
b) implementing a machine learning algorithm and generating at least one pre-processing rule, the generating comprising utilizing a plurality of training sensor data and associated training action indications;
c) implementing a pre-processing algorithm and determining pre-processed sensor data, the determining comprising utilizing the at least one pre-processing rule and the plurality of sensor data;
d) implementing the machine learning algorithm and determining at least one action indication, the determining comprising utilizing the pre-processed sensor data; and
e) outputting the at least one action indication.

In an example, step b) comprises determining at least one correlation between the plurality of training sensor data and associated action indications.

In an example, step b) comprises identifying training sensor data that is unused or substantially unused with respect to the associated training action indications, the identification comprising utilizing the at least one correlation.

In an example, in step b) the machine learning algorithm comprises a neural network.

In an example, in step b) the machine learning algorithm comprises a Bayesian network.

In an example, in step b) generating the at least one pre-processing rule comprises identifying a sub-set of the plurality of training sensor data that is unused or substantially unused with respect to the associated training action indications.

In an example, in step b) the machine learning algorithm comprises a decision tree algorithm.

In an example, in step b) generating the at least one pre-processing rule comprises determining dependencies between the plurality of training sensor data and associated training action indications.

In an example, in step c) the pre-processing algorithm comprises a complex event processing algorithm.

In an example, in step c) determining the pre-processed sensor data comprises utilizing the at least one pre-processing rule to select one or more sensor devices.

In an example, in step c) determining the pre-processed sensor data comprises utilizing the at least one pre-processing rule to activate or deactivate one or more sensor devices.

In an example, in step c) determining the pre-processed of sensor data comprises utilizing the at least one pre-processing rule to configure a communication mechanism.

In an example, the method comprises adding one or more of the pre-processed sensor data to the plurality of training sensor data and adding one or more associated action indications of the at least one action indication to the training action indications, and updating the at least one pre-processing rule comprising utilization of the of updated plurality of training sensor data and associated updated training action indications.

Thus, a process plant can have many process control systems, with numerous sensors providing sensor data, and with respect to this data-flow, an evaluation model is analyzed to understand the required input data. This is done to more efficiently and flexibly determine what actions should be taken for specific situations based on that data-flow.

By limiting the events to only relevant events/input changes, the communication efforts and also the efforts in the backend for model evaluation are reduced. The end decision is equivalent to that made when all the sensor data is sent to the backend in an un-pre-processed way and pre-processed and evaluated there.

Often an evaluation model only depends/reacts on certain input variables, and in the back end the model training results in rules that can be utilized at the front end (by the edge device) to qualify what data needs to be transmitted for analysis. Thus, where typically all value changes, from the whole data-flow form all sensors, are transmitted to the evaluation model in order to trigger an evaluation, in the present system and method a much reduced set of value changes need to be transmitted in order to determine what action to undertake. Thus, a local processing device is provided to filter and pre-process the incoming data in a way that only relevant events are sent to the backend using a representation that fits to the needs of the targeted evalution model.

Many traditional systems therefore use the backend as a data sink, because it is not known which data is required. Thus, all data is pushed to the backend in case the model evaluation might make use of it. Various issues are related to this known approach: besides the large efforts for data transmission and model evaluation, this approach is not well scalable - regarding more and more installed sensors and more (loT/AI) backend services that come up and must be integrated on the sensor data. Also, data privacy is often an issue, when all data must be transferred towards the backend.

Thus, in the new system and method for action indication determination the issue of unfiltered data transport and the model evaluation on each value change, that would otherwise result in large efforts, is addressed.

This is achieved through the extraction of relevant input variables from the model. Mechanisms like Complex Event Processing (CEP) can be used and configured to filter relevant value changes depending on the actual model (e.g. certain thresholds / time windows). This extraction and creation of pre-processing rules can then be integrated with the model adaption/training process. In other words, intelligence is pushed to the field (instead of dumping all data to the cloud), and there is a reduction in effort, with less communication overhead and less CPU consumption.

Referring again to Fig. 1 in a specific and detailed workflow, this involves the extraction of relevant input variables from the model: Depending on the algorithm that was used for the evaluation model dependencies between the result value and the input values are determined. In a decision tree the exact dependency of which sensor data will cause, in a particular situation, a change of the result value can be extracted. In other algorithms, for example Neuronal-Networks or Bayesian-Networks, at least unused or almost irrelevant input values can be identified. Also, in a general situation and without considering the generated model, multiple algorithms for attribute selection exist (basically they compute the correlation between the input variables of the training data set and the result value) and these can be used to identify irrelevant input variables.

In a specific situation, pre-processing mechanisms are applied on the input data before the evaluation - e.g. aggregate multiple incoming values building up average values. Also, information about such pre-processing mechanisms is extracted and used to filter (or aggregate) the data before transmission.

The extracted information about the relevance of input variables is used to configure pre-processing (such as filtering/adapting) mechanisms. These pre-processing mechanisms are integrated with, or near to, the components that generate the input values - the sensors that provide the sensor data. These pre-processing mechanisms can comprise sensor device selection or complete sensor device activation/deactivation, configuration of communication aspects (polling / subscription mechanisms) and further intermediate components that can be integrated with the information flow to manipulate it - like message brokers or complex event processing (CEP) engines.

This extraction and creation of pre-processing rules is integrated with the model adaption/training process. This integration ensures that each time the evaluation model or pre-processing mechanisms are adapted, the pre-processing mechanisms are also adapted accordingly.

As discussed above, the new system and method for action indication determination reduces the overhead required for transmission of (potentially irrelevant) sensor data, and enables a model evaluation process to operate only on relevant value changes, and thereby provides for the more efficient determination of what actions should be taken when faced with an enormous data flow coming from a multitude of sensor devices.

Thus, if the extracted information describes which sensors are irrelevant, the sensors whose data that are completely irrelevant can be deactivated or not subscribed/polled by the rest of the system. If the communication technology that is used, supports finer granular subscriptions - e.g. configuring dead-band filters or defining sampling rates (e.g. as available in OPC UA), also these mechanisms can be configured based on the extracted information.

In a specific example it has been established that Complex Event Processing (CEP) is one of the most flexible and fine granular concepts that can be used together with the extracted information. Depending on the extracted information (i.e. also depending on the applied evaluation model algorithm and applied processing mechanisms), finer granular rules can also be created. Typically, CEP is done based on a SQL based queries, which can be used to define rules that can contain dead-band ranges or thresholds (e.g. as used in a decision trees) or can determine average values over multiple sensors and certain time windows (e.g. as used in pre-processing mechanisms). In this manner, parts of the pre-processing can be moved to the field. This pre-processing in the field can then also be used to abstract/obfuscate from the real data to address privacy issues. This results in a data flow to the backend that is reduced to only relevant and pre-processed data.

The following relates to a brief discussion of established techniques for event filtering and action indication determination, that were found not to be satisfactory and that led to the development of the new system and method described here.

US6363435 B1 describes that a single object functions as a centralized monitoring point for events fired in a hierarchical object model. Objects within the hierarchy register with the event monitoring object when they are created. These objects then route their events to the event monitoring object. A listening object also registers with the event monitoring object to receive notification upon the occurrence of certain events within the hierarchy. A property of the event monitoring object corresponding to a particular class of object is parameterized with an identifier that designates the events to be sourced to the listening object. The event monitoring object couples the listening object to a filter object that sources only events designated by the parameterized property. The event monitoring creates the filter objects as needed. A filter object can report events to more than one listening object if the listening objects register to be notified of the same events.

US2016217387A1 describes machine learning with model filtering and model mixing for edge devices in a heterogeneous environment. In an example embodiment, an edge device includes a communication module, a data collection device, a memory, a machine learning module, and a model mixing module. The edge device analyzes collected data with a model for a first task, outputs a result, and updates the model to create a local model. The edge device communicates with other edge devices in a heterogeneous group, transmits a request for local models to the heterogeneous group, and receives local models from the heterogeneous group. The edge device filters the local models by structure metadata, including second local models, which relate to a second task. The edge device performs a mix operation of the second local models to generate a mixed model which relates to the second task, and transmits the mixed model to the heterogeneous group.

US2013031567A1 describes a method for processing a stream of events. The method includes receiving a stream of events at a local device. The stream of events is associated with the local device. Further, the stream of events includes one or more out-of-order events. The method also includes executing a first complex event processing query against the stream of events. The stream of events is processed based on multiple levels of consistency defined by a set of operators. Additionally, the method includes correcting the out-of-order events based on the set of operators. A first output is generated in which consistency is guaranteed based on the corrected out-of-order events. The method also includes sending the first output to a server that performs complex event processing on the output.

S. Zoller, A. Reinhardt, S. Schulte and R. Steinmetz, "Scoresheet-based event relevance determination for energy efficiency in wireless sensor networks," 2011 IEEE 36th Conference on Local Computer Networks, Bonn, 2011, pp. 207-210 describe that "As wireless sensor nodes are mostly battery- powered, energy-efficient operation is a necessity to use their confined energy budget optimally. This is especially true in the logistics domain, where timely and accurate monitoring of containers is required, while the cost pressure is high. Thus, besides the need for energy efficiency, wireless sensor network deployments in logistics require cost efficiency as well. As data transmission represents the most expensive operation in terms of energy consumption and monetary costs, we present a concept for the local determination of transmission relevance in this paper. By omitting irrelevant events from transmission, the amount of data to transmit is effectively reduced. Our approach employs concepts from the business economics sector and is based on the use of scoresheets, which evaluate information on a wireless sensor node to decide whether they are "worth" transmitting or not. Thus, a scoresheet-based approach provides a viable solution for local filtering to realize energy-and cost-efficient operation of a wireless sensor network while maintaining the benefits of data fidelity and real-time event notifications".

A. Papageorgiou, M. Schmidt, J. Song and N. Kami, "Smart M2M Data Filtering Using Domain-Specific Thresholds in Domain-Agnostic Platforms," 2013 IEEE International Congress on Big Data, Santa Clara, CA, 2013, pp. 286-293, describe that "Due to the demand for homogeneous, intelligent, and automated access to data measured anywhere and from any device, Machine-to-Machine (M2M) platforms are evolving as globally-intended multi-layer solutions that provide such access, abstracting from all technology-specific tasks. In order to preserve the stability of their potentially huge data-handling systems and the usefulness of their Big Data, M2M platforms must maintain some data selection and filtering logic. A challenge that appears in modern M2M platforms is related to the decoupling of the front end (devices, area networks) from the backend (applications, databases). Because of this decoupling, domain-specific tricks cannot be applied any more for filtering at the front end. This paper presents a solution using domain-specific filtering thresholds in a domain-agnostic platform, as well as filtering flows and algorithms tailored to modern M2M platforms. Their combination assembles the first filtering solution that supports the unified handling of heterogeneous filters. In an evaluation from the utility-monitoring domain, instances of our approach showed high efficiency of configuration and were the only ones to achieve, for example, forwarding less than 25% of the captured data maintaining a coverage ratio bigger than 50% for all considered applications".

However, as discussed above in such established techniques typically all changes are pushed to the model-evaluation in order to trigger it, leading to large efforts for Al model evaluation on each value change.

However, the new system and method developed and described here enables a trained model to be "in-the-loop", that can react efficiently to changes, and where the fact that a model only depends/reacts on certain input variables has been taken into account. In a specific embodiment this is achieved through the extraction of relevant input variables, and where CEP is used to describe more concrete dependencies (e.g. certain thresholds / time windows), enabling the triggering of data transfer and model evaluation on only relevant changes (e.g. sensor data). In this way, with CEP more specific queries (than simple subscriptions) are possible, and appropriate data pre-processing settings can also be downloaded and executed in the field. Overall, this enables intelligence to be pushed to the field (instead of dumping all data to the cloud), and leads to a reduction in effort, with less communication overhead and less CPU consumption.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A system for action indication determination, comprising:
- an input unit;
- a first processing unit;
- a second processing unit; and
- an output unit;
wherein, the input unit is configured to provide the first processing unit with a plurality of sensor data from a plurality of sensors;
wherein, the second processing unit is configured to implement a machine learning algorithm to generate at least one pre-processing rule, wherein the generation comprises utilization of a plurality of training sensor data and associated training action indications;
wherein, the second processing unit is configured to provide the first processing unit with the at least one pre-processing rule;
wherein, the first processing unit is configured to implement a pre-processing algorithm to determine pre-processed sensor data, wherein the determination comprises utilization of the at least one pre-processing rule and the plurality of sensor data;
wherein, the first processing unit is configured to provide the pre-processed sensor data to the second processing unit;
wherein, the second processing unit is configured to implement the machine learning algorithm to determine at least one action indication, wherein the determination comprises utilization of the pre-processed sensor data; and
wherein, the output unit is configured to output the at least one action indication.

2. System according to claim 1, wherein generation of the at least one pre-processing rule comprises a determination of at least one correlation between the plurality of training sensor data and associated action indications.

3. System according to claim 2, wherein generation of the at least one pre-processing rule comprises an identification of training sensor data that is unused or substantially unused with respect to the associated training action indications, the identification comprising utilization of the at least one correlation.

4. System according to any of claims 1-3, wherein the machine learning algorithm comprises a neural network.

5. System according to any of claims 1-3, wherein the machine learning algorithm comprises a Bayesian network.

6. System according to any one of claims 4-5, wherein generation of the at least one pre-processing rule comprises an identification of a sub-set of the plurality of training sensor data that is unused or substantially unused with respect to the associated training action indications.

7. System according to any of claims 1-3, wherein the machine learning algorithm comprises a decision tree algorithm.

8. System according to claim 7, wherein generation of the at least one pre-processing rule comprises a determination of dependencies between the plurality of training sensor data and associated training action indications.

9. System according to any of claims 1-8, wherein the pre-processing algorithm comprises a complex event processing algorithm.

10. System according to any of claims 1-9, wherein determination of the pre-processed sensor data comprises utilization of the at least one pre-processing rule to select one or more sensor devices.

11. System according to any of claims 1-10, wherein determination of the pre-processed sensor data comprises utilization of the at least one pre-processing rule to activate or deactivate one or more sensor devices.

12. System according to any of claims 1-11, wherein determination of the pre-processed sensor data comprises utilization of the at least one pre-processing rule to configure a communication mechanism.

13. System according to any of claims 1-12, wherein the second processing unit is configured to add one or more of the pre-processed sensor data to the plurality of training sensor data and add one or more associated action indications of the at least one action indication to the training action indications, and update the at least one pre-processing rule comprising utilization of the of updated plurality of training sensor data and associated updated training action indications.

14. A method for action indication determination, comprising:
a) providing a plurality of sensor data from a plurality of sensors;
b) implementing a machine learning algorithm and generating at least one pre-processing rule, the generating comprising utilizing a plurality of training sensor data and associated training action indications;
c) implementing a pre-processing algorithm and determining pre-processed sensor data, the determining comprising utilizing the at least one pre-processing rule and the plurality of sensor data;
d) implementing the machine learning algorithm and determining at least one action indication, the determining comprising utilizing the pre-processed sensor data; and
e) outputting the at least one action indication.

15. A computer program element for controlling a system according to any one of claims 1 to 13, which when executed by a processor is configured to carry out the method of claim 14.
